# FASCICULE DE BREVET EUROPEEN

(11) **EP 3 259 091 B1**
(45) Date de publication et mention de la délivrance du brevet: **29.01.2020**
(21) Numéro de dépôt: 16705106.9
(22) Date de dépôt: 15.02.2016
(51) Int. Cl.: B23K 20/00, B21C 37/15, B23K 20/02, B23K 20/26, B23K 28/00, B60K 15/04, F02M 37/00, B23K 101/00, B23K 101/06

(54) **ENSEMBLE COMPRENANT UNE TUBULURE POUR UN RESERVOIR ET UN OUTIL DE SOUDAGE D'UN SUPPORT SUR LA TUBULURE ; INSTALLATION COMPRENANT UN TEL ENSEMBLE**
KOMBINATION UMFASSEND EIN ROHR FÜR EINEN TANK UND EIN WERKZEUG ZUM SCHWEISSEN EINES WINKELS AUF DAS ROHR ; SYSTEM MIT EINER SOLCHEN KOMBINATION
COMBINATION OF A TUBE FOR A TANK AND A TOOL FOR WELDING A BRACKET ONTO THE TUBE ; SYSTEM COMPRISING SUCH COMBINATION

(30) Priorité: 16.02.2015 FR 1551278
(43) Date de publication de la demande: 27.12.2017
(73) Titulaire: Plastic Omnium Advanced Innovation and Research, 1130 Bruxelles (BE)
(72) Inventeur: TONDU, Jérémie, 75018 Paris (FR); POTIER, Alain, 60127 Fresnoy la Rivière (FR)
(74) Mandataire: Potdevin, Emmanuel Eric
(86) Numéro de dépôt international: PCT/EP2016/053193
(87) Numéro de publication internationale: WO 2016/131783

(56) Documents cités:
- WO-A1-2009/015428
- WO-A1-2015/011776
- DE-A1- 19 750 067
- US-A1- 2002 100 160
- US-A1- 2005 194 049
- US-B1- 6 349 869

## Description

L'invention concerne un ensemble comprenant une tubulure pour un réservoir, et un outil de soudage conformément au préambule de la revendication 1 (voir, par exemple, WO 2015 011776 A1), pour l'assemblage de tubulures pour des véhicules automobiles et notamment l'ajout de composants tels que des supports de fixation à de telles tubulures.

Dans un véhicule automobile assemblé, la tubulure de remplissage est reliée, en communication de fluide, d'une part au réservoir et d'autre part à un orifice, recouvert d'une trappe, permettant à un utilisateur d'introduire, au moyen d'une pompe adaptée, du carburant dans le réservoir.

La tubulure est fixée dans le véhicule au moyen d'un ou plusieurs supports de fixation. Ces supports sont soudés à la tubulure et comprennent des moyens de fixation à d'autres parties du véhicule.

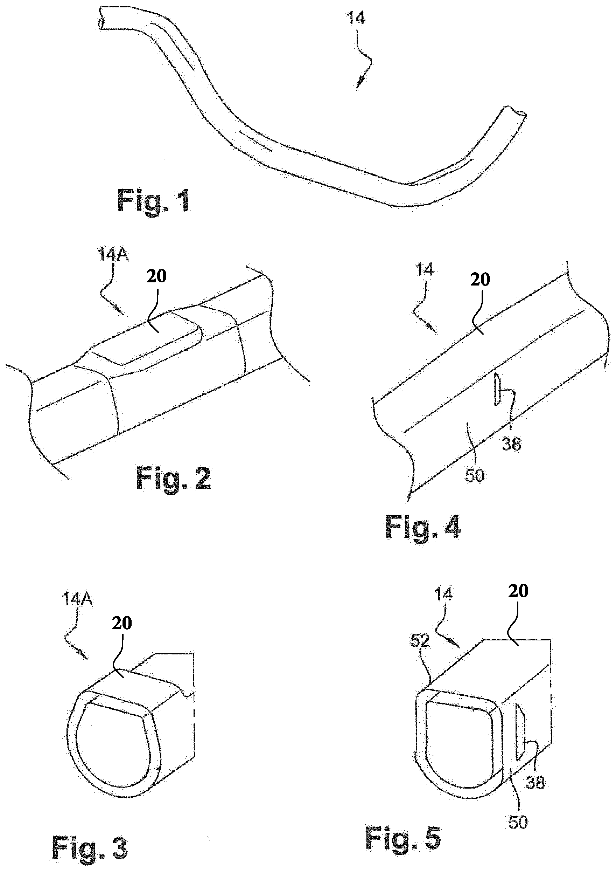

Actuellement, pour souder chaque support de fixation sur la tubulure, on maintient la tubulure de telle manière qu'elle soit disposée sur des sièges épousant exactement la forme de la tubulure. La section d'une tubulure de l'art antérieur, dans son tronçon recevant le support de fixation soudé, est représentée aux figures 2 et 3, sur lesquelles on voit que la tubulure présente un méplat servant de zone de soudure.

Au moyen d'un outil adapté, on chauffe le méplat, qui est la surface de la tubulure destinée à être soudée, on chauffe le support de fixation, puis on soude le support de fixation à la tubulure en l'appliquant contre la surface de la tubulure et en exerçant une forte pression. Cette pression n'entraine pas de déformation de la tubulure car les sièges maintiennent cette dernière en limitant les concentrations de contraintes.

Ainsi, les sièges sur lesquels repose la tubulure sont spécifiques à chaque tronçon de tubulure qu'ils accueillent. Ils sont conformés et agencés spécialement sur un poste de travail.

Les sièges qui accueillent la tubulure sur le poste de travail épousent exactement la surface externe de la tubulure, ce qui évite les concentrations de contrainte par une bonne répartition des appuis.

De plus, l'outil permettant de réaliser la soudure sur chaque tronçon a une position particulière sur le poste de travail, spécifique au support de fixation à souder.

Sur un poste de travail, les sièges spécifiques et les réglages de position de l'outil permettent de réaliser une soudure de bonne qualité, sans altération de la tubulure.

Pour un véhicule donné, il arrive fréquemment que la forme de la tubulure varie d'un modèle à l'autre, par exemple entre le modèle cinq portes et la berline, ou entre la berline et le coupé, ce qui implique autant de stations de travail que de modèles.

Un but de l'invention est de fournir un outil de soudage plus flexible, qui soit notamment capable de s'adapter à différents tronçons d'une même tubulure, voire à différentes variantes géométriques d'une tubulure.

Pour ce faire, il est proposé un ensemble selon la revendication 1.

Avantageusement, l'outil de soudage de cet ensemble comprend :
- des moyens de préhension de la tubulure, agencés pour maintenir la tubulure et l'outil dans une position fixe l'un par rapport à l'autre, tout en libérant l'accès à un méplat qui est une surface de la tubulure destinée à être soudée au composant,
- des moyens de chauffage du méplat, mobiles par rapport aux moyens de préhension de la tubulure, entre une position de chauffage du méplat et une position rétractée,
- des moyens de chauffage du composant, et
- des moyens de préhension du composant, mobiles par rapport aux moyens de chauffage du composant et par rapport aux moyens de préhension de la tubulure, entre une position de chauffage du composant et une position de soudage du composant sur le méplat.

Ainsi, un même outil porte les moyens de préhension de la tubulure et les moyens nécessaires à la réalisation de la soudure. En conséquence, il n'est plus nécessaire de prévoir des sièges de forme spécifique à chaque tronçon de la tubulure devant recevoir un composant.

De plus, il est possible, en déplaçant simplement l'outil en différentes positions préréglées successives, de souder différents composants, en différents emplacements le long de la tubulure, sans avoir à déplacer la tubulure d'un poste de travail à un autre poste de travail.

En outre, en modifiant les préréglages de positionnement de l'outil, de manière à lui faire prendre une succession de positions qui dépendent du modèle de tubulure à assembler, on peut utiliser le même équipement pour souder des composants à des tubulures destinées à des modèles de véhicules automobiles différents, sans avoir à changer de poste de travail. Il suffit de régler les positions de l'outil pour chaque modèle de tubulure. Par exemple, si un robot est chargé de positionner l'outil en un ou plusieurs tronçons de la tubulure, la programmation du robot tiendra compte de la géométrie de la tubulure et pourra changer avec le modèle de tubulure.

Dans l'outil selon l'invention, les moyens de préhension de la tubulure sont polyvalents, au sens où ils peuvent ne pas être conformés pour épouser exactement la forme d'un tronçon de tubulure particulier. Ils sont au contraire capables de prendre n'importe quel tronçon d'une tubulure dont les dimensions sont comprises dans des intervalles couvrant la plupart des variantes connues de tubulures pour une section de forme courante, c'est-à-dire globalement ronde (par exemple circulaire, ovale, oblongue) ou angulaire (par exemple carrée, rectangulaire, triangulaire).

De préférence, les moyens de préhension de la tubulure sont agencés pour orienter et positionner la tubulure par rapport à l'outil dans une position et une orientation prédéterminée.

Ainsi, les moyens de préhension assurent un positionnement précis, sans intervention extérieure, de la tubulure. Le chauffage de toute la surface de la tubulure est donc homogène.

Selon un mode de réalisation, les moyens de chauffage du méplat et les moyens de chauffage du composant sont confondus, par exemple sous la forme d'un miroir commun.

Selon un mode de réalisation, les moyens de chauffage du méplat et les moyens de préhension du composant sont solidaires en translation selon une première direction (X). Les moyens de chauffage du composant sont quant à eux fixes par rapport aux moyens de chauffage du méplat et aux moyens de préhension du composant.

La fabrication de l'outil est donc plus simple car un seul organe moteur sert au mouvement à la fois des moyens de chauffage de la tubulure et des moyens de préhension du composant.

De préférence, les moyens de chauffage du méplat sont mobiles en translation selon une seconde direction (Y), de préférence transversale à la première direction (X), par rapport aux moyens de préhension de la tubulure.

Le déplacement des moyens de chauffage de la surface de la tubulure est alors facile à programmer.

Conformément à la présente invention, les moyens de préhension de la tubulure comprennent une mâchoire. La mâchoire comprend au moins une dent supérieure et une dent inférieure, la dent supérieure comprenant au moins une première surface interne plane apte à venir en contact avec le méplat, la dent inférieure comprenant au moins une deuxième surface interne plane apte à venir en contact avec au moins un flanc plan de référence prévu sur la tubulure, le flanc plan de référence étant tel qu'il permet de positionner le méplat en regard des moyens de chauffage du méplat lorsque les dents supérieure et inférieure se rapprochent l'une de l'autre.

Il s'agit d'un moyen de préhension simple à fabriquer.

Dans un mode de réalisation préféré, la dent supérieure comprend deux premières surfaces internes planes agencées l'une par rapport à l'autre de manière à former un V et la dent inférieure comprend deux deuxièmes surfaces internes planes agencées l'une par rapport à l'autre de manière à former un V.

Selon un mode de réalisation, les moyens de préhension de la tubulure comprennent au moins un détecteur et/ou un microprocesseur destinés à contrôler la position du méplat.

Le risque d'erreur est ainsi minimisé.

De préférence, les moyens de chauffage comprennent un élément chauffant et une plaque chauffée par l'élément chauffant.

Avantageusement, les moyens de chauffage du méplat comprennent au moins un détecteur et/ou microprocesseur destinés à contrôler la position des moyens de chauffage par rapport à la tubulure.

De préférence, les moyens de préhension du composant comprennent au moins un détecteur et/ou microprocesseur destinés à contrôler la position des moyens de préhension par rapport à la tubulure.

Le risque d'erreur est donc minimisé.

Dans un mode de réalisation particulier de l'invention, l'outil de soudage est adapté pour souder un composant de type support de fixation, permettant de fixer la tubulure à une partie d'un véhicule automobile.

Dans un autre mode de réalisation, l'outil de soudage est adapté pour souder un composant de type support de ligne, permettant d'attacher la tubulure à une autre tubulure. Avantageusement, l'outil est destiné à être utilisé pour la fixation d'une tubulure de remplissage d'un réservoir.

Selon un mode de réalisation, l'outil est destiné à être utilisé pour la fixation d'une tubulure d'un véhicule automobile.

De préférence, l'outil est destiné à être utilisé pour la fixation d'une tubulure de remplissage d'un réservoir à carburant, par exemple d'un véhicule automobile.

On prévoit en outre selon l'invention une tubulure d'un réservoir à carburant, caractérisée en ce qu'elle comprend une forme adaptée pour être utilisée avec un outil tel que précédemment décrit et un composant soudé au moyen de l'outil.

La forme adaptée permet de confondre, lors du soudage, le méplat et une zone de chauffe uniforme des moyens de chauffage de la surface. On est ainsi assuré d'obtenir une soudure de bonne qualité.

Conformément l'ensemble suivant l'invention défini dans la revendication 1 comprend aussi une tubulure pour un réservoir, où sa paroi comprend un méplat et, de part et d'autre de ce méplat dans une direction transversale à la tubulure, deux flancs plans perpendiculaires à ce méplat.

Les flancs plans perpendiculaires sont adaptés pour coopérer avec les moyens de préhension de la tubulure, et plus particulièrement avec les surfaces internes planes des dents de la mâchoire.

Les flancs plans permettent de disposer le méplat en regard des moyens de chauffage de la surface afin d'obtenir un chauffage du méplat homogène.

De préférence, la tubulure de l'ensemble suivant l'invention telle que définie dans la revendication 1 comprend au moins une saillie destinée à coopérer avec des moyens de préhension de tubulure d'un outil, pour contrôler la position de la tubulure par rapport à cet outil.

Avantageusement, la tubulure est destinée à être utilisée comme tubulure de remplissage d'un réservoir à carburant, par exemple d'un véhicule automobile.

On prévoit enfin, selon l'invention, une installation définie dans la revendication 13.

On va maintenant décrire, à titre d'exemple non limitatif, un mode de réalisation de l'invention à l'aide des figures suivantes :
- la figure 1 est une vue en perspective d'une tubulure,
- les figures 2 et 3 sont des vues, en perspective et en coupe dans une direction transversale à celle de la tubulure, d'une tubulure selon l'art antérieur,
- les figures 4 et 5 sont des vues, en perspective et en coupe dans une direction transversale à celle de la tubulure, de la tubulure selon l'invention,
- la figure 6 est une vue en perspective d'un outil selon un mode de réalisation de l'invention,
- la figure 7 est une vue en perspective de l'outil en prise avec une tubulure selon l'invention,
- la figure 8 est une vue en perspective de moyens de préhension de l'outil,
- la figure 9 est une vue en perspective d'un robot portant un outil,
- la figure 10 est une vue en perspective d'un autre exemple de composant pouvant être soudé à la tubulure selon l'invention et
- la figure 11 représente la tubulure attachée à une autre tubulure, grâce au composant de la figure 10,
- la figure 12 représente schématiquement la préhension de la tubulure par les moyens de préhension de l'outil, et
- la figure 13 représente le composant de la figure 10 à la fin de l'étape de soudage, par l'outil 10, sur la tubulure.

En référence aux figures 1, 4 et 5, on va d'abord décrire une tubulure 14.

La tubulure 14 est une tubulure de remplissage d'un réservoir à carburant de véhicule automobile, selon l'invention. Cette tubulure 14 est conçue pour qu'on puisse y souder au moins un support de fixation à l'aide d'un outil de soudage de l'invention.

On a représenté, aux figures 2 et 3, une tubulure 14A selon l'art antérieur, à titre de comparaison.

La surface 20 de la tubulure 14 destinée à être soudée se présente sous la forme d'un méplat. De part et d'autre de ce méplat 20, dans une direction transversale à la tubulure 14, cette dernière comprend deux flancs 50, 52 plans et perpendiculaires à ce méplat.

Par comparaison, les flancs perpendiculaires à la surface de soudage 20 de la tubulure 14A ne sont pas plans. Selon l'art antérieur, la partie de la tubulure 14A, portant la surface 20 destinée à être soudée, reposait sur un siège épousant exactement sa forme au moment de la soudure du support de fixation. Ainsi, ce siège positionnait et orientait la tubulure par rapport aux moyens de chauffage de la surface de la tubulure destinée à être soudée. Grâce à la forme de la tubulure selon le présent mode de réalisation de l'invention, les flancs plans 50, 52 perpendiculaires au méplat 20 permettent à la tubulure 14 de pouvoir être positionnée et orientée par des moyens portés par l'outil que l'on décrira plus loin.

La tubulure 14 comprend ici deux saillies 38, ici sous la forme de godrons, disposées symétriquement sur les deux flancs 50, 52. Ces saillies 38 sont destinées à coopérer avec des moyens de préhension de tubulure 14 de l'outil de soudage, et ce, afin de contrôler la position de la tubulure 14 par rapport à l'outil 10.

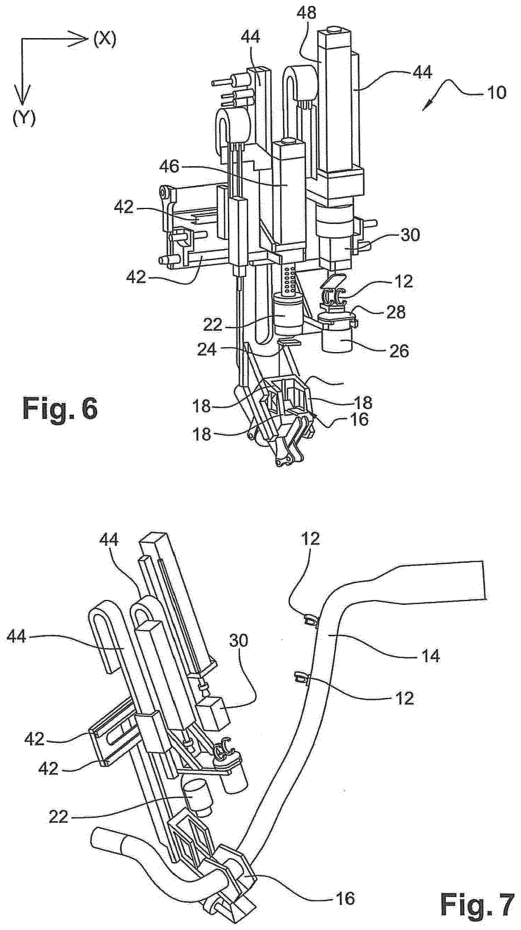

On a représenté aux figures 6 à 8, un outil de soudage 10 selon l'invention. L'outil de soudage 10 permet de souder au moins un composant tel qu'un support de fixation 12 à une tubulure 14 de remplissage d'un réservoir à carburant d'un véhicule automobile. Le support de fixation 12 est destiné à permettre la fixation de la tubulure 14 dans le véhicule, en étant d'une part soudé à une surface externe de la tubulure 14 et d'autre part fixé à des parties du véhicule.

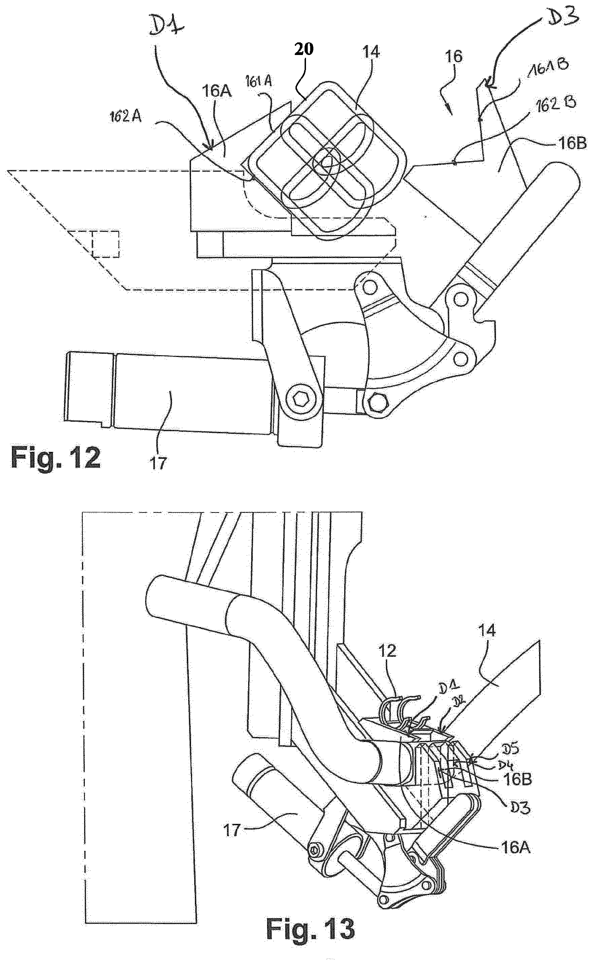

L'outil 10 comprend des moyens de préhension de la tubulure 14. Ici, ces moyens de préhension comprennent une mâchoire 16, commandée ici par au moins un vérin pneumatique (référencée 17 sur les figures 12 et 13) ou selon une variante, par au moins un vérin électrique.

La mâchoire 16 comprend une partie 16Afixe et une partie mobile 16B. La partie fixe 16A comprend deux dents supérieures D1, D2 espacées l'une de l'autre par une distance prédéterminée. La distance entre les deux dents est telle que le support de fixation 12 peut être inséré entre les deux dents pour accéder au méplat. Ainsi, les dents supérieures D1, D2 sont disposées de façon à libérer l'accès au méplat 20, surface de la tubulure 14 sur laquelle le support de fixation 12 est destiné à être soudé.

La partie mobile 16B comprend trois dents inférieures D3, D4, D5 espacées les unes des autres par une distance prédéterminée. Le rôle des dents inférieures est de maintenir la tubulure 14 et l'outil 10 dans une position fixe l'un par rapport à l'autre. On entend par « fixe l'un par rapport à l'autre » le fait que la tubulure 14 est immobile par rapport à la position générale de l'outil 10 bien que des parties de l'outil 10 soient mobiles les unes par rapports aux autres, comme on va le décrire plus loin.

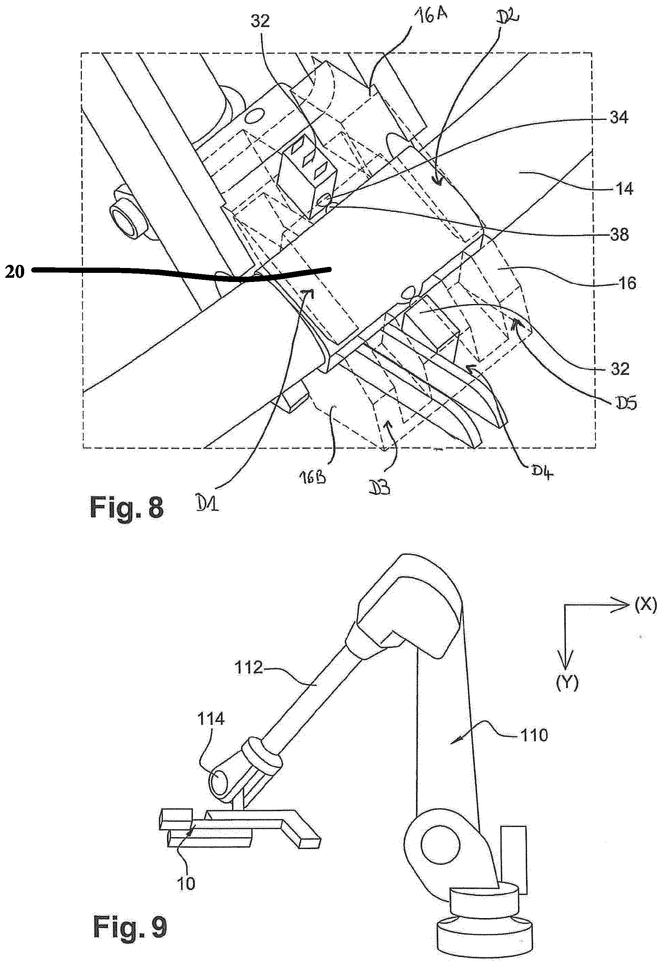

Dans l'exemple de réalisation illustré en figure 8 les dents D1 et D2 sont identiques c'est-à-dire qu'elles ont les mêmes dimensions et profil. Les dents D3 et D5 sont identiques c'est-à-dire qu'elles ont les mêmes dimensions et profil. La dent D4 a des dimensions et un profil différent des dents D3 et D5 puisqu'elle comprend un détecteur de présence 32. De façon avantageuse la dent D4 comprend un logement dans lequel est inséré et fixé le détecteur de présence 32.
Les profils des dents D1 et D3 sont illustrées à la figure 12. La dent D1 comprend une surface interne plane supérieure 161A et une surface interne plane inférieure 162A. La surface interne plane supérieure 161A est apte à venir en contact avec le méplat 20.
La surface interne plane inférieure 162A est apte à venir en contact avec un flanc plan de référence. Les surfaces internes planes 161A et 162A sont agencées l'une par rapport à l'autre de manière à former un V ou un L.
La dent D3 comprend une surface interne plane supérieure 161B et une surface interne plane inférieure 162B. La surface interne plane supérieure 161B est apte à venir en contact avec un flanc plan de référence. La surface interne plane inférieure 162A est apte à venir en contact et supporter la face de la tubulure opposée au méplat. Les surfaces internes planes 161B et 162B sont agencées l'une par rapport à l'autre de manière à former un V ou un L.
On note que le profil en V ou en L des dents supérieures et inférieures permet d'assurer un bon isostatisme entre la tubulure et l'outil.

L'outil 10 comporte également des moyens de chauffage du méplat 20 de la tubulure 14. Ces moyens comprennent un collier chauffant 22 et une pièce cylindrique 24 comprenant du bronze cylindrique 24 faisant office de miroir permettant la concentration du chauffage vers le méplat 20 lorsque la tubulure 14 est positionnée dans l'outil 10. Lorsque le collier chauffant 22 est activé, la pièce cylindrique 24 est chauffée par celui-ci par conduction. Cette pièce cylindrique 24 présente une dimension adaptée, par rapport à la mâchoire 16, pour que sa face principale puisse atteindre le méplat 20 de la tubulure 14. Ces moyens de chauffage du méplat 20 de la tubulure 14 sont mobiles par rapport à la mâchoire 16, entre une position de chauffage du méplat 20 et une position rétractée. Dans sa position rétractée, les moyens de chauffage sont, tels que représentés à la figure 6, éloignés de la tubulure 14. Dans sa position de chauffage du méplat 20, la pièce cylindrique 24 est en contact avec le méplat 20 et chauffe ce dernier par conduction.

L'outil 10 comprend des moyens de chauffage du support de fixation 12. Ils comprennent donc un élément chauffant 26 et une plaque 28 apte à être chauffée par l'élément chauffant 26.

De plus, l'outil 10 comporte des moyens de préhension 30 du support de fixation 12. Ces moyens de préhension 30 peuvent être de tous types. Il peut s'agir d'une pince. De préférence, les moyens de préhension 30 comprennent au moins un capteur électronique et/ou au moins un microprocesseur permettant d'assurer une préhension du support de fixation 12 optimale.

On va maintenant décrire les moyens de contrôle des positions de la tubulure 14 et notamment du méplat 20, par rapport à l'outil 10.

Comme on le voit mieux sur la figure 8, les moyens de préhension de la tubulure 14, ici une mâchoire 16, comprennent deux détecteurs de présence 32 à poussoir 34 commandés électroniquement. Les détecteurs de présence 32 sont destinés à contrôler la position du méplat 20. Le nombre de détecteur de présence 32 n'est pas une caractéristique limitative de l'invention et peut être par exemple égal à un ou zéro.

Chaque détecteur de présence 32 coopère respectivement avec l'excroissance s'étendant en saillie 38, visible aux figures 4 et 5. Dans ce mode de réalisation, lorsque chaque détecteur 32 détecte, dans sa direction de détection, une saillie 38, la préhension de la tubulure 14 par la mâchoire 16 est validée.

En outre, les moyens de préhension 30 du support de fixation 12 comprennent au moins un détecteur et un microprocesseur destinés à contrôler la position des moyens de préhension 30, lorsqu'ils portent le support de fixation 12 par rapport à la tubulure 14.

En outre, les moyens de chauffage de la tubulure 14 et les moyens de préhensions 30 du support de fixation 12 sont mobiles les uns par rapport aux autres. Les moyens de chauffage du support de fixation 12 sont quant eux fixes par rapport aux moyens de chauffage 22, 24 de la tubulure 14 et aux moyens de préhension 30 du support de fixation.

Les moyens de préhension 30 du support de fixation 12 sont mobiles par rapport à l'élément chauffant 26 et la plaque 28. Ainsi, ces moyens sont mobiles par rapport aux moyens de chauffage du support de fixation 12 entre une position de chauffage du support de fixation 12, notamment représentée à la figure 6, et une position de soudage du support de fixation 12 sur le méplat 20. Dans cette dernière position, le support de fixation 12 est disposé en contact direct sur le méplat qui est maintenu par la mâchoire 16 immobile.

De plus, l'ensemble formé par l'élément chauffant 22 et la pièce cylindrique 24 et les moyens de préhension du support de fixation 30 sont solidaires en translation selon une première direction (X), ici horizontale. Ces éléments sont aptes à se déplacer selon la direction (X) au moyen de deux rails de translation 42. Ces rails 42, parallèles et s'étendant selon la direction (X), sont reliés aux organes 44 portant respectivement l'élément chauffant 22, la pièce cylindrique 24 et l'élément chauffant 26 et la plaque 28.

Ainsi, les moyens de chauffage du méplat 20 de la tubulure 14 et les moyens de préhension du support de fixation 12 sont solidaires en translation selon la direction (X).

L'ensemble formé par l'élément chauffant 22 et la pièce cylindrique 24 est également mobile en translation selon une seconde direction (Y), ici verticale, par rapport à aux moyens de préhension de la tubulure. Cette mobilité est possible au moyen d'un piston 46, relié à l'élément chauffant 22 et à la plaque 24, ici fonctionnant à l'énergie électrique et commandé électroniquement. Selon une variante du présent mode de réalisation, il est commandé électroniquement mais mobile grâce à de l'énergie hydraulique. Selon une troisième variante, il est commandé mécaniquement et mobile grâce à de l'énergie hydraulique.

Les moyens de préhension du support de fixation 12 sont mobiles selon la direction (Y) par rapport à la mâchoire 16 grâce à un piston 48 analogue au piston 46.

Ainsi, les moyens de chauffage du méplat 20 de la tubulure 14 sont mobiles en translation selon la direction (Y), transversale à la direction (X), par rapport aux moyens de préhension de la tubulure 14.

On a représenté à la figure 9 une installation 100 comprenant un robot 110 électroniquement commandé et comportant un bras 112 comprenant des moyens de préhension 114 de l'outil 10. Le robot 110 est destiné à positionner l'outil 10, notamment par rapport à la tubulure 14.

On va maintenant brièvement décrire un procédé de soudage du support de fixation 12 sur le méplat 20 de la tubulure 14, notamment en référence aux figures 12 et 13. Initialement, l'outil est dans sa configuration représentée à la figure 6.

Tout d'abord, le robot 110 positionne et oriente l'outil 10 par rapport à la tubulure 14. Comme on le voit sur la figure 12, la partie mobile 16B de la mâchoire 16 se rapproche progressivement de la partie fixe 16A. Du fait de la forme de la tubulure 14, ce rapprochement positionne et oriente la tubulure 14 de façon à disposer le méplat 20 de la tubulure 14 en regard de la pièce cylindrique 24.
Puis, cette pièce cylindrique 24 est translatée selon la direction (Y) pour venir en contact avec le méplat 20 de la tubulure 14 au moyen du piston 46. Elle chauffe le méplat 20 de la tubulure 14 jusqu'à ce que celle-ci atteigne une température de soudage convenable.

Concomitamment, la plaque 28 chauffe le support de fixation 12 jusqu'à ce qu'il atteigne une température de soudage convenable.

Ensuite, la pièce cylindrique 24 est translatée selon la direction (Y) pour revenir dans la position visible à la figure 6. Dans le même temps, les moyens de préhension 30 du support de fixation 12 saisissent le support de fixation 12. Selon une variante, le support de fixation 12 est saisi au début du procédé de soudage.

Puis, les moyens de préhension 30 du support de fixation 12 et l'ensemble formé par le collier chauffant 22 et la pièce cylindrique 24 sont translatés selon la direction X, le long des deux rails 42, jusqu'à ce que le support de fixation 12 soit en regard du méplat 20.

Ensuite, au moyen du piston 48, les moyens de préhension 30 du support de fixation 12 sont translatés selon la direction (Y) jusqu'à ce que le support de fixation 12 soit en contact avec le méplat 20 de la tubulure 14. Ces deux pièces sont maintenues en contact, au moins le temps nécessaire pour que la soudure s'opère. Le support de fixation 12 alors fixé au méplat 20 comme on le voit sur la figure 13.

Puis, les moyens de préhension 30 du support de fixation 12 se dessaisissent de ce support et la mâchoire 16 libère la tubulure 14.

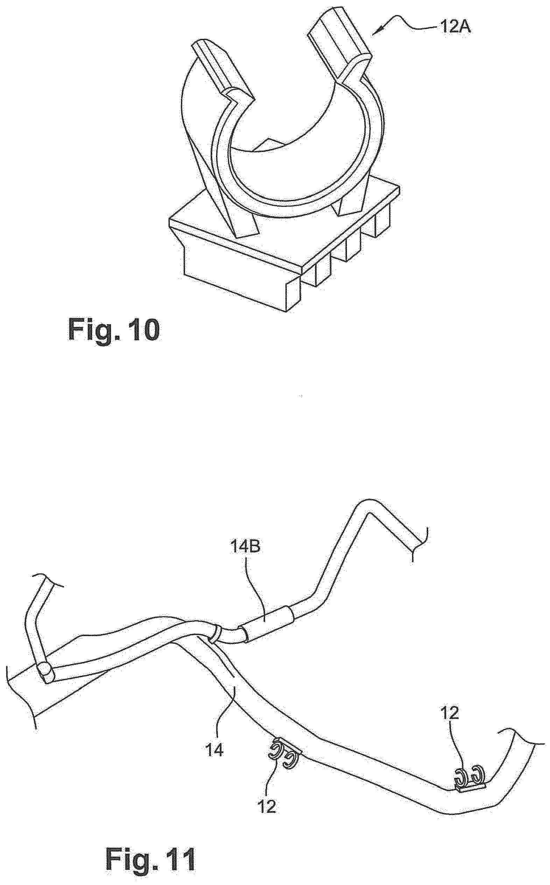

Sur la figure 10, on a représenté un autre type de composant pouvant être soudé sur le méplat 20 de la tubulure. Ce composant est un support de ligne 12A, permettant d'attacher la tubulure 14 à une autre tubulure 14B, comme on le voit sur la figure 11.

Bien entendu, on pourra apporter à l'invention de nombreuses modifications sans sortir du cadre de celle-ci.

On pourra notamment modifier les moyens de chauffage du méplat 20 ou du support de fixation 12.

On pourra également modifier l'agencement des différents moyens de chauffage ainsi que les mobilités des uns par rapport aux autres.

## Revendications

1. Ensemble comprenant une tubulure (14) pour un réservoir et un outil de soudage (10) d'au moins un composant (12) à la tubulure (14) pour un réservoir, la tubulure (14) comprenant un méplat qui est une surface de la tubulure destinée à être soudée au composant (12) et au moins un flanc plan de référence (50, 52) adaptés pour être utilisés avec l'outil (10) et le composant (12) soudé au moyen de l'outil, l'outil (10) comprenant :
- des moyens de préhension (16, 18) de la tubulure (14) agencés pour maintenir la tubulure (14) et l'outil (10) dans une position fixe l'un par rapport à l'autre ;
- des moyens de chauffage (22, 24) du méplat (20);
**caractérisé en ce que** les moyens de préhension (16, 18) de la tubulure (14) comprennent une mâchoire (16) comprenant au moins une dent supérieure (16A) et une dent inférieure (16B), la dent supérieure comprenant au moins une première surface interne plane (161A) apte à venir en contact avec le méplat, la dent inférieure comprenant au moins une deuxième surface interne plane (161B) apte à venir en contact avec le au moins un flanc plan de référence (50, 52) prévu sur la tubulure, le flanc plan de référence étant tel qu'il permet de positionner le méplat (20) en regard des moyens de chauffage (22, 24) du méplat (20) lorsque les dents supérieure et inférieure se rapprochent l'une de l'autre.

2. Ensemble selon la revendication 1, dans lequel la dent supérieure (16A) comprend deux premières surfaces internes planes (161A, 162A) agencées l'une par rapport à l'autre de manière à former un V et la dent inférieure (16B) comprend deux deuxièmes surfaces internes planes (161B, 162B) agencées l'une par rapport à l'autre de manière à former un V.

3. Ensemble selon la revendication 1 ou 2, **caractérisé en ce que** l'outil (10) comprend :
- des moyens de chauffage (26, 28) du composant (12), et
- des moyens de préhension (30) du composant (12), mobiles par rapport aux moyens de chauffage (26, 28) du composant (12) et par rapport aux moyens de préhension (16, 18) de la tubulure (14), entre une position de chauffage du composant (12) et une position de soudage du composant (12) sur le méplat (20).

4. Ensemble selon la revendication 3, dans lequel les moyens de chauffage (22, 24) du méplat (20) et les moyens de chauffage (26, 28) du composant (12) sont confondus, par exemple sous la forme d'un miroir commun.

5. Ensemble selon la revendication 3 ou 4, dans lequel les moyens de chauffage (22, 24) du méplat (20) et les moyens de préhension (30) du composant (12) sont solidaires en translation selon une première direction (X).

6. Ensemble selon l'une quelconque des revendications 3 à 5, dans lequel les moyens de chauffage (26, 28) de composant (12) comprennent un élément chauffant (26) et une plaque (28) chauffée par l'élément chauffant (26) et les moyens de chauffage (22, 24) du méplat (20) comprennent un collier chauffant (22) et un miroir (24).

7. Ensemble selon l'une quelconque des revendications 1 à 6, dans lequel les moyens de chauffage (22, 24) du méplat (20) sont mobiles en translation selon une seconde direction (Y), de préférence, transversale à la première direction (X), par rapport aux moyens de préhension (16, 18) de la tubulure (14).

8. Ensemble selon l'une quelconque des revendications 1 à 7, dans lequel l'outil (10) est adapté pour souder un composant (12) de type support de fixation, permettant de fixer la tubulure (14) à une partie d'un véhicule automobile.

9. Ensemble selon l'une quelconque des revendications 1 à 7, dans lequel l'outil (10) est adapté pour souder un composant de type support de ligne, permettant d'attacher la tubulure (14) à une autre tubulure (14B).

10. Ensemble selon l'une quelconque des revendications 1 à 9, dans lequel la tubulure (14) est une tubulure de remplissage d'un réservoir à carburant d'un véhicule automobile.

11. Ensemble selon l'une quelconque des revendications 1 à 10, **caractérisé en ce que** la tubulure (14) comprend deux flancs (50, 52) plans de référence perpendiculaires au méplat (20).

12. Ensemble selon l'une quelconque des revendications 1 à 11, **caractérisé en ce que** la tubulure (14) comprend au moins une saillie (38) pour contrôler la position de la tubulure (14) par rapport à l'outil (10).

13. Installation (100) comprenant un ensemble selon l'une des revendications 1 à 12, pour souder au moins un composant (12) à une tubulure (14) de cet ensemble, et comprenant un robot (110) destiné à positionner l'outil de cet ensemble par rapport à la tubulure de cet ensemble.

## Patentansprüche

1. Baugruppe, umfassend ein Rohr (14) für einen Tank und ein Werkzeug (10) zum Anschweißen mindestens einer Komponente (12) an das Rohr (14) für einen Tank, wobei das Rohr (14) eine Abflachung, die eine Fläche des zu verschweißenden Rohres an der Komponente (12) ist, und mindestens einen Referenzebenenflansch (50, 52) umfasst, der zur Verwendung mit dem Werkzeug (10) und der durch das Werkzeug geschweißten Komponente (12) geeignet ist, wobei das Werkzeug (10) Folgendes umfasst:
- Greifmittel (16, 18) für das Rohr (14), die angeordnet sind, um das Rohr (14) und das Werkzeug (10) in einer festen Position relativ zueinander zu halten;
- Heizmittel (22, 24) der Abflachung (20);
**dadurch gekennzeichnet, dass** die Greifmittel (16, 18) für das Rohr (14) eine Backe (16) umfassen, die mindestens einen oberen Zahn (16A) und einen unteren Zahn (16B) umfasst, wobei der obere Zahn mindestens eine erste flache Innenfläche (161A) umfasst, die geeignet ist, mit der Abflachung in Kontakt zu kommen, wobei der untere Zahn mindestens eine zweite flache Innenfläche (161B) umfasst, die geeignet ist, mit dem mindestens einen an dem Rohr vorgesehenen Referenzebenenflansch (50, 52) in Kontakt zu kommen, wobei der Referenzebenenflansch derart ist, dass es möglich ist, die Abflachung (20) gegenüber den Heizmitteln (22, 24) der Abflachung (20) zu positionieren, wenn sich die oberen und unteren Zähne einander nähern.

2. Baugruppe nach Anspruch 1, wobei der obere Zahn (16A) zwei erste flache Innenflächen (161A, 162A) umfasst, die relativ zueinander angeordnet sind, um ein V zu bilden, und der untere Zahn (16B) zwei zweite flache Innenflächen (161B, 162B) umfasst, die relativ zueinander angeordnet sind, um ein V zu bilden.

3. Baugruppe nach Anspruch 1 oder 2, **dadurch gekennzeichnet, dass** das Werkzeug (10) Folgendes umfasst:
- Heizmittel (26, 28) für die Komponente (12) und
- Greifmittel (30) der Komponente (12), die relativ zu den Heizmitteln (26, 28) der Komponente (12) und relativ zu den Greifmitteln (16, 18) der Rohre (14) zwischen einer Heizposition der Komponente (12) und einer Schweißposition der Komponente (12) auf der Abflachung (20) beweglich sind.

4. Baugruppe nach Anspruch 3, bei der die Heizmittel (22, 24) der Abflachung (20) und die Heizmittel (26, 28) der Komponente (12) zusammenfallen, zum Beispiel in Form eines gemeinsamen Spiegels.

5. Baugruppe nach Anspruch 3 oder 4, bei der die Heizmittel (22, 24) der Abflachung (20) und die Greifmittel (30) der Komponente (12) in einer ersten Richtung (X) verschiebbar befestigt sind.

6. Baugruppe nach einem der Ansprüche 3 bis 5, wobei die Heizmittel (26, 28) der Komponente (12) ein Heizelement (26) und eine durch das Heizelement (26) erwärmte Platte (28) umfassen und wobei die Heizmittel (22, 24) der Abflachung (20) einen Heizkragen (22) und einen Spiegel (24) umfassen.

7. Baugruppe nach einem der Ansprüche 1 bis 6, bei der die Heizmittel (22, 24) der Abflachung (20) in einer zweiten Richtung (Y), vorzugsweise quer zur ersten Richtung (X), in Bezug auf die Greifmittel (16, 18) des Rohres (14) verschiebbar sind.

8. Baugruppe nach einem der Ansprüche 1 bis 7, wobei das Werkzeug (10) zum Schweißen einer Befestigungsträgerkomponente (12) geeignet ist, wodurch das Rohr (14) an einem Teil eines Kraftfahrzeugs befestigt werden kann.

9. Baugruppe nach einem der Ansprüche 1 bis 7, wobei das Werkzeug (10) geeignet ist, um eine Leitungshalterkomponente zu schweißen, wodurch sich das Rohr (14) an einem anderen Rohr (14B) befestigen lässt.

10. Baugruppe nach einem der Ansprüche 1 bis 9, wobei das Rohr (14) ein Einfüllstutzen für einen Kraftstofftank eines Kraftfahrzeugs ist.

11. Baugruppe nach einem der Ansprüche 1 bis 10, **dadurch gekennzeichnet, dass** das Rohr (14) zwei Referenzebenenflansche (50, 52) umfasst, die senkrecht zur Abflachung (20) angeordnet sind.

12. Baugruppe nach einem der Ansprüche 1 bis 11, **dadurch gekennzeichnet, dass** das Rohr (14) mindestens eine Auskragung (38) zur Steuerung der Position des Rohres (14) in Bezug auf das Werkzeug (10) umfasst.

13. Anlage (100), umfassend eine Baugruppe nach einem der Ansprüche 1 bis 12, zum Schweißen mindestens einer Komponente (12) an ein Rohr (14) dieser Baugruppe, und umfassend einen Roboter (110) zur Positionierung des Werkzeugs dieser Baugruppe in Bezug auf das Rohr dieser Baugruppe.

## Claims

1. Assembly comprising a tube (14) for a tank and a welding tool (10) for welding at least one component (12) with the tube (14) for a tank,
the tube (14) comprising a flattened part, which is a surface of the tube (14) designed to be welded on the component (12), and at least one flat reference flank (50, 52) which are designed to be used with the tool (10) and the component (12) welded by means of the tool,
the tool (10) comprising:
- means (16, 18) for gripping of the tube (14), which are designed to retain the tube (14) and the tool (10) in a position fixed relative to one another;
- means (22, 24) for heating the a flattened part (20);
**characterized in that** the means (16, 18) for gripping of the tube (14) comprise a jaw (16) comprising at least one upper tooth (16A) and one lower tooth (16B), with the upper tooth comprising at least one first flat inner surface (161A) which can come into contact with the flattened part, the lower tooth comprising at least one second flat inner surface (161B) which can come into contact with at least one flat reference flank (50, 52) provided on the tube, with the flat reference flank being such that it makes it possible to position the flattened part (20) opposite the means (22, 24) for heating of the flattened part (20), when the upper and lower teeth approach one another.

2. Assembly as claimed in the preceding claim, wherein the upper tooth (16A) comprises two first flat inner surfaces (161A, 162A) which are arranged relative to one another such as to form a "V", and the lower tooth (16B) comprises two second flat inner surfaces (161B, 162B) which are arranged relative to one another such as to form a "V".

3. Assembly as claimed in claim 1 or 2, **characterized in that** the tool (10) comprises:
- means (26, 28) for heating of the component (12); and
- means (30) for gripping of the component (12), which are mobile relative to the means (26, 28) for heating of the component (12) and relative to the means (16, 18) for gripping of the tube (14), between a position for heating of the component (12), and a position for welding of the component (12) onto the flattened part (20).

4. Assembly as claimed in claim 3, wherein the means (22, 24) for heating of the flattened part (20) and the means (26, 28) for heating of the component (12) are combined, for example in the form of a common mirror.

5. Assembly as claimed in claim 3 or 4, wherein the means (22, 24) for heating of the flattened part (20) and the means (30) for gripping of the component (12) are integral in translation in a first direction (X).

6. Assembly as claimed in any one of claims 3 to 5, wherein the means (26, 28) for heating of the component (12) comprise a heating element (26) and a plate (28) which is heated by the heating element (26), and the means (22, 24) for heating of the flattened part (20) comprise a heating collar (22) and a mirror (24).

7. Assembly as claimed in any one of claims 1 to 6, wherein the means (22, 24) for heating of the flattened part (20) are mobile in translation in a second direction (Y), which is preferably transverse to the first direction (X), relative to the means (16, 18) for gripping of the tube (14).

8. Assembly as claimed in any one of claims 1 to 7, wherein the tool (10) is designed to weld a component (12) of the mounting bracket type, making it possible to secure the tube (14) on a part of a motor vehicle.

9. Assembly as claimed in any one of claims 1 to 7, wherein the tool (10) is designed to weld a component of the line bracket type, making it possible to attach the tube (14) to another tube (14B).

10. Assembly as claimed in any one of claims 1 to 9, wherein the tube (14) is a tube for filling of a fuel tank of a motor vehicle.

11. Assembly as claimed in any one of claims 1 to 10, **characterized in that** the tube (14) comprises two flat reference flanks (50, 52) perpendicular to the flattened part (20).

12. Assembly as claimed in any one of claims 1 to 10, **characterized in that** the tube (14) comprises at least one projection (38) in order to control the position of the tube (14) relative to the tool (10).

13. Installation (100) comprising an assembly as claimed in any one of claims 1 to 12, for welding of at least one component (12) on a tube (14) of this assembly, and comprising a robot (110) which is designed to position the tool of this assembly relative to the tube of this assembly
